# EUROPEAN PATENT SPECIFICATION

(11) **EP 1 580 225 B1**
(45) Date of publication and mention of the grant of the patent: **31.03.2010**
(21) Application number: 04028433.3
(22) Date of filing: 01.12.2004
(51) Int. Cl.: C08K 7/02, C08K 7/14, E01C 7/26

(54) **Additive for reinforcing bitumen matrices**
Verstärkungszusatzmittel für Bitumenmatrizen
Additif de renforcement pour matrices bitumées

(30) Priority: 23.03.2004 IT MI20040562
(43) Date of publication of application: 28.09.2005
(73) Proprietor: Saint-Gobain Technical Fabrics Europe, 73000 Chambéry (FR)
(72) Inventor: Ferrante, Antonio, 20045 Besana Brianza (Milano) (IT)
(74) Representative: Muller, René

(56) References cited:
- EP-A- 0 511 618
- EP-A- 0 798 345
- WO-A-96/11980
- GB-A- 1 470 098
- US-A- 4 738 723
- US-A- 5 028 266
- US-A- 5 401 588
- US-A1- 2002 086 930

## Description

The present invention relates to an improved additive particularly suitable for reinforcing bitumen matrices, and to the relative method of preparation. The same invention is also extended to the bitumen matrix reinforced with said additive and to the method for producing said bitumen matrix.

The field of application of the present invention is that of bituminous concretes or bitumen matrices, constituted by a mixture of bitumen, aggregates and fillers.

These matrices, particularly due to their use in the preparation of road surfaces (micro-surfaces, wear surfaces, draining surfaces and the like) require specific properties of mechanical resistance:

Conventionally, reinforcement of bitumen matrices is obtained by adding, to the bitumen mix, yarns of vegetable fibres (such as cellulose, jute and the like), the main drawback of which is represented by their high capacity to absorb humidity. Over time vegetable fibres tend to deteriorate and lose their ability to adhere to the bitumen matrix, which for this reason is unable to preserve the desired degree of mechanical stability.

Reinforcement of bitumen matrices with the use of E-glass yarns is also known, although they do not allow rapid control of the flow curve of the bitumen concrete, especially during the first phase to transport and lay it.

WO96/11980 discloses a process for producing cellulose fibres containing pellets for use as an additive for a bitumen. The production of the pellets comprises steps of preparing a composite mass comprising cellulose fibres (80 to 93 % by weight), an oil and silica, and transforming the mass into pellets under compression.

GB1470098 discloses a composition comprising a mixture of E-glass yarns and yarns of vegetable origin, which is impregnated with a bitumen. The bitumen composition wherein an E-glass is used has a better hydrolytic stability over alkali glass.

The main object of the present invention is to provide an improved additive to reinforce bitumen matrices which, compared to currently used additives, besides improved properties of mechanical resistance and stability of the final product (both in terms of preventing absorption of water and for improved thermal resistance), also offers a stabilizing effect on the flow curve of the bitumen concrete.

These and other objects are obtained with the reinforcement additive, the relative preparation method, the method for preparing bitumen matrices and the bitumen matrices thus obtained, according to claims 1, 14, 15 and 16 respectively. Some preferred methods of embodiment of the invention are set forth in the remaining claims.

With respect to conventional products in the sector, the additive of the invention offers the advantages of being simultaneously a reinforcing and stabilizing component of bitumen matrices produced with modified bitumens, wherein the small quantity of vegetable fibres, added to the E-glass yam, performs the function of retaining, for a relatively short time, those small quantities of bitumen not retained by the glass yarn, so as to stabilize the concrete and make the flow curve uniform, although without participating in its reinforcement, which is instead carried out by the glass yarn alone. In this way the "fraas" breaking point of the bitumen matrix, the workability and elastic shrinkage, as well as the softening point are all improved.

On its part, the presence of the ethylene-vinyl amide or ethylene-vinyl acetate (EVA) polymer is particularly significant for the elastic recovery, with improvement of the duration of the paving.

Therefore, in general, the additive of the invention offers the advantage of stabilizing the flow curve of the bitumen concrete, which cannot be obtained currently with the use of E-glass yarn alone, and prevents the drawbacks deriving from the use of vegetable fibres alone.

These and other objects are obtained with the additive, the bitumen matrix and the method of the invention, some non-limiting examples of which are illustrated in the figures below. In these:
- Figure 1 shows the additive of the invention, as it appears ready for use:
- Figure 2 shows in a longitudinal section a pellet of the additive in Figure 1;
- Figure 3 shows the methods to prepare the additive of the previous figures.

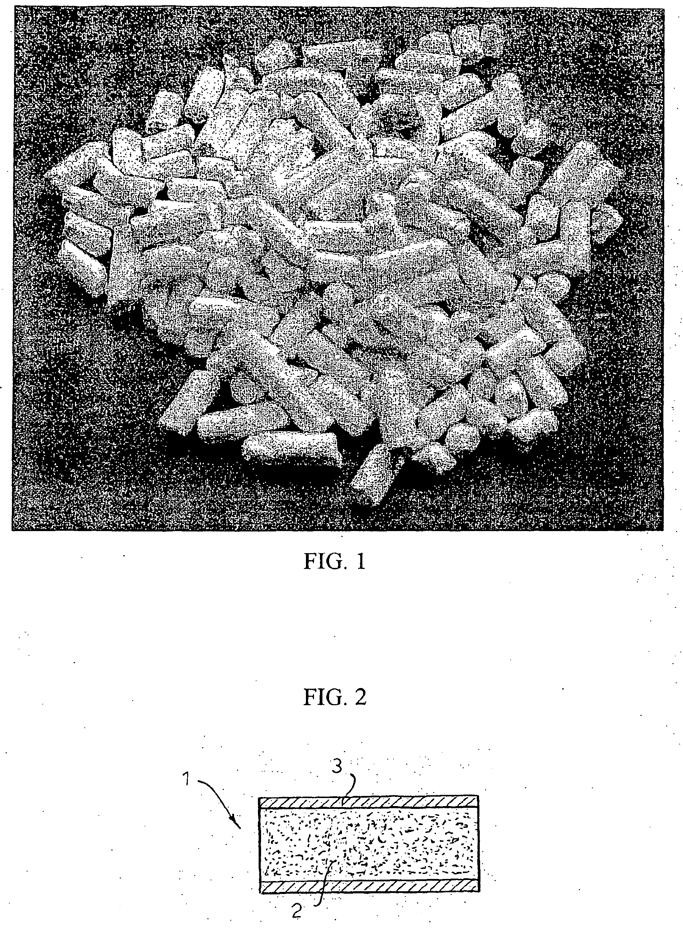

The additive of the invention is constituted by pellets, that is, by the small cylinders 1 in Figure 1, in turn comprising an inner core 2 composed of a filler of E-glass yarns mixed with yarns of vegetable origin, and an outer film 3 with the function of anti-dust container of this filler, constituted by a heat-meltable material (preferably ethylene-vinyl amide or ethylene-vinyl acetate (EVA)). In particular, the inner core 2 of the pellets 1 is constituted by a cold and low pressure agglomerate of E-glass yarn and vegetable yarns, such as cellulose, linen and soya, jute and the like.

The aforesaid yarns of natural origin, present in the mixture of the additive of the invention, must not exceed 25% in weight, to avoid the drawbacks typical of these components and which are mentioned above.

According to the invention, other specific yarns to control absorption of the bitumen are added to this E-glass yarn. Those preferred for the invention are E-glass yarns with a urea binder. Optimal, although not binding, for the invention are the glass yarns having a diameter of 10-14 µ and a length ranging from 500 µ to 5 mm.

The outer film 3 of the pellets 1 is constituted by an ethylene-vinyl amide or ethylene-vinyl acetate (EVA) polymer with low melting point (melting temperature preferably below 100°C), having the function of preventing the material of the core 2 from being dispersed into the environment.

The composition of the additive of the invention is preferably formed of filaments of pure cellulose, present in a quantity of 25% in weight, together with 73% in weight of E-glass yarn and 2% in weight of ethylene-vinyl amide or ethylene-vinyl acetate (EVA) polymers. The product is then processed to eliminate all breathable particles (< 5 µ).

The proportion in weight of the material forming the core 2 and the film 3 of the individual pellets 1 is preferably of 25-75% of the material of the core 2 and 1-8% of the film 3, preferably 2-4%.

Pellets with a diameter of approximately 4-8 mm (preferably 5-8 mm) and a length of 2-15 mm (preferably 2-10 mm) are thereby obtained, as a function of the type of system utilizing them and of the programmed mixing time.

According to a preferred embodiment of the invention, the pellets 1 are formed of E-glass yarns with the addition of cellulose yarn and have a:
- diameter of the yarns: 8-14 µ
- density: ≥1.4 kg/dm³
- humidity: <1.5%

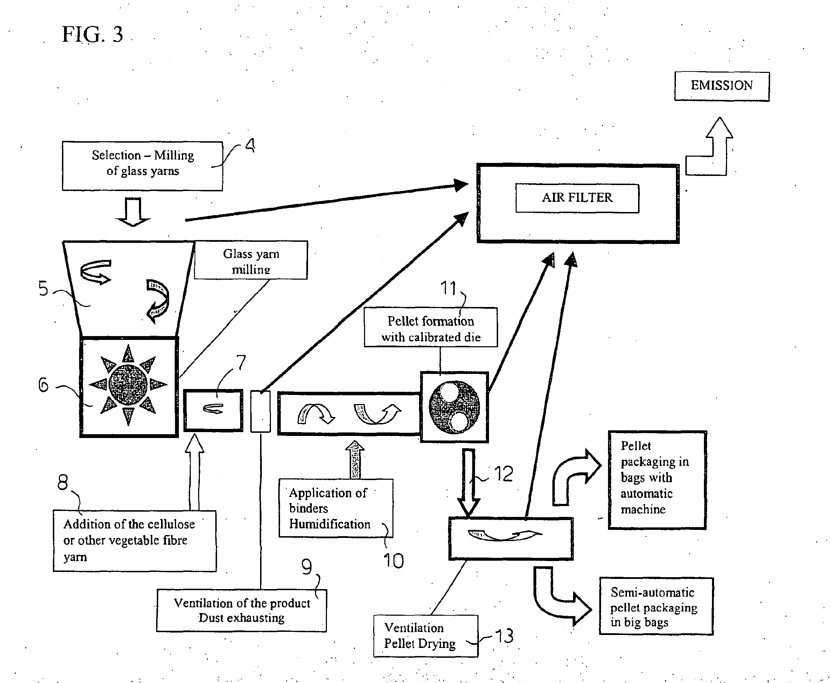

When preparing the additive of the invention, as shown in Figure 3, the mixture 4 of the E-glass yarns is conveyed in a hopper 5 to the outlet from which the glass yarn is milled in a mill 6. The filler 8 of vegetable yarns is then added to the milled product 7, the mixture is then ventilated in 9 to exhaust the dusts, while in 10 the binder is applied. After passing through the calibrated die 11, the resulting pellets 12 are subjected to drying 13.

Advantageously, according to the invention, with the friction produced by the die 13 temperatures of around 50°C are produced, thanks to which the polymer melts, winding around the core material 2 of the pellets 1 in the form of a film 3.

The dried product is fed into the bitumen concrete production systems using the same machines which currently meter and inject the "bitumen flock", to which small adjustments required for calibration are made, to increase the density of the product. In continuous cycle systems the material can be added using the pellet milling belt, so that it is dispersed in the concrete. Upon contact with the heat, the film in heat-meltable material which coats the pellets 1 dissolves, thereby modifying the yarn which, in turn, performs its function of micro-reinforcement of the concrete. In this way a high specific surface is obtained, thanks to which even small quantities of the product are sufficient to cover very large surfaces, thereby ensuring reinforcement of even very thin layers of bituminous concretes.

The additive of the invention can be used to reinforce bitumen matrices, such as high strength concretes, draining concretes, anti-skid concretes and concretes with micro-surfaces.

## Claims

1. Pellet (1) of additive for reinforcing bitumen matrices, in the form of a cylinder, comprising an inner core (2) comprising a filler constituted of a mixture of E-glass yarns and yarns of vegetable origin, and an outer film (3) constituted by a heat-meltable material, said mixture containing no more than 25% in weight of said yarns of vegetable origin.

2. Pellet as claimed in previous claim, **characterized in that** said yarns of vegetable origin are constituted by fibres of cellulose, soya, jute and the like.

3. Pellet as claimed in claim 1 or 2, **characterized in that** the heat-meltable material has a melting temperature below 100°C.

4. Pellet as claimed in one or more of the previous claims, **characterized in that** the heat-meltable material is an ethylene-vinyl amide or ethylene-vinyl acetate (EVA) polymer.

5. Pellet as claimed in one or more of the previous claims, **characterized in that** said filler (2) also contains E-glass yarns with a urea binder.

6. Pellet as claimed in one or more of the previous claims, **characterized in that** it has a diameter of 4-8 mm and a length of 2-10 mm.

7. Pellet as claimed in one or more of the previous claims, **characterized in that** the E-glass yarn and vegetable yarn filaments have a length of 300-500 µm and a diameter of 8-14 µm.

8. Pellet as claimed in one or more of the previous claims, **characterized in that** it is formed of 25-75% of the core (2) and 1-8% of the film (3).

9. Method of preparation of the pellet as claimed in one or more of the previous claims, **characterized in that** it entails friction heating melting of a heat-meltable material made to pass through a die, so as to determine the formation of pellets (1) obtained by winding said molten material in the form of a film (3) around the material of said core (2).

10. Method of preparation of a bitumen matrix with the pellet (1) as claimed in one or more of claims 1 to 8, **characterized in that** it entails heating of a film of heat-meltable material (3) which coats the pellets (1), dissolving it in order to release said material which thereby modifies the bitumen and simultaneously releases the glass yarn.

11. Bitumen matrix, **characterized in that** it is obtainable with the pellet and with the method as claimed in one or more of the previous claims.

12. Bitumen matrix as claimed in previous claim, **characterized in that** it is constituted by high strength concretes, draining concretes, anti-skid concretes and concretes with micro-surfaces.

## Patentansprüche

1. Pellet (1), das als Additiv für die Verstärkung von Bitumenmatrizen dient und in Form eines Zylinders vorliegt, der einen inneren Kern (2), der einen Füllstoff umfasst, der aus einem Gemisch aus Garnen aus E-Glas und Garnen pflanzlichen Ursprungs gebildet ist, und einen äußeren Film (3), der aus einem heißschmelzbaren Material gebildet ist, umfasst, wobei dieses Gemisch nicht mehr als 25 Gew.-% dieses Garns pflanzlichen Ursprungs enthält.

2. Pellet nach dem vorhergehenden Anspruch, **dadurch gekennzeichnet, dass** die Garne pflanzlichen Ursprungs aus Fasern aus Cellulose, Soja, Jute und dergleichen gebildet sind.

3. Pellet nach Anspruch 1 oder 2, **dadurch gekennzeichnet, dass** das heißschmelzbare Material eine Schmelztemperatur von unter 100 °C besitzt.

4. Pellet nach einem oder mehreren der vorhergehenden Ansprüche, **dadurch gekennzeichnet, dass** das heißschmelzbare Material ein Ethylen-Vinylamid- oder Ethylen-Vinylacetat-(EVA-)Polymer ist.

5. Pellet nach einem oder mehreren der vorhergehenden Ansprüche, **dadurch gekennzeichnet, dass** der Füllstoff (2) auch E-Glas-Garne mit einem Harnstoffbindemittel enthält.

6. Pellet nach einem oder mehreren der vorhergehenden Ansprüche, **dadurch gekennzeichnet, dass** sein Durchmesser 4 bis 8 mm und seine Länge 2 bis 10 mm beträgt.

7. Pellet nach einem oder mehreren der vorhergehenden Ansprüche, **dadurch gekennzeichnet, dass** die E-Glas-Garn- und die pflanzlichen Garnfasern eine Länge von 300 bis 500 µm und einen Durchmesser von 8 bis 14 µm besitzen.

8. Pellet nach einem oder mehreren der vorhergehenden Ansprüche, **dadurch gekennzeichnet, dass** es zu 25 bis 75 % von dem Kern (2) und 1 bis 8 % dem Film (3) gebildet ist.

9. Verfahren zur Herstellung des Pellets nach einem oder mehreren der vorhergehenden Ansprüche, **dadurch gekennzeichnet, dass** durch Reibung das Heißschmelzen eines heißschmelzbaren Materials, das durch eine Düse geschickt wird, bewirkt wird, sodass sich Pellets (1) bilden, die durch Wickeln dieses geschmolzenen Materials in Form eines Films (3) um das Material des Kerns (2) erhalten werden.

10. Verfahren zur Herstellung einer Bitumenmatrix mit dem Pellet (1) nach einem oder mehreren der Ansprüche 1 bis 8, **dadurch gekennzeichnet, dass** der Film (3) aus heißschmelzbarem Material, mit welchem die Pellets (1) überzogen sind, erhitzt und gelöst wird, um dieses Material abzulösen, wodurch das Bitumen modifiziert und gleichzeitig das Glasgarn freigelegt wird.

11. Bitumenmatrix, **dadurch gekennzeichnet, dass** sie mit dem Pellet und durch das Verfahren nach einem oder mehreren der vorhergehenden Ansprüche erhältlich ist.

12. Bitumenmatrix nach dem vorhergehenden Anspruch, **dadurch gekennzeichnet, dass** sie aus hochfestem Beton, entwässerndem Beton, rutschfestem Beton und Beton mit Mikrooberflächen gebildet ist.

## Revendications

1. Pastille (1) d'additif pour renforcer des matrices de bitume, sous la forme d'un cylindre, comprenant un coeur interne (2) comprenant une charge constituée d'un mélange de fils de verre E et de fils d'origine végétale, et un film externe (3) constitué par un matériau thermofusible, ledit mélange ne contenant pas plus de 25 % en poids desdits fils d'origine végétale.

2. Pastille selon la revendication précédente, **caractérisée en ce que** lesdits fils d'origine végétale sont constitués par des fibres de cellulose, soja, jute, et autres.

3. Pastille selon la revendication 1 ou 2, **caractérisée en ce que** le matériau thermofusible a une température de fusion en dessous de 100°C.

4. Pastille selon l'une ou plusieurs des revendications précédentes, **caractérisée en ce que** le matériau thermofusible est un polymère éthylène-vinylamide ou éthylène-acétate de vinyle (EVA).

5. Pastille selon l'une ou plusieurs des revendications précédentes, **caractérisée en ce que** ladite charge (2) contient également des fils de verre E avec un liant à base d'urée.

6. Pastille selon l'une ou plusieurs des revendications précédentes, **caractérisée en ce qu'**elle a un diamètre de 4-8 mm et une longueur de 2-10 mm.

7. Pastille selon l'une ou plusieurs des revendications précédentes, **caractérisée en ce que** les filaments de fil de verre E et de fil végétal ont une longueur de 300-500 µm et un diamètre de 8-14 µm.

8. Pastille selon l'une ou plusieurs des revendications précédentes, **caractérisée en ce qu'**elle est constituée de 25-75 % du coeur (2) et 1-8 % du film (3).

9. Procédé de préparation de la pastille selon l'une ou plusieurs des revendications précédentes, **caractérisé en ce qu'**il comporte la fusion par chauffage par frottement d'un matériau thermofusible que l'on fait passer à travers une filière, de manière à conditionner la formation de pastilles (1) obtenues en enroulant ledit matériau fondu sous la forme d'un film (3) autour du matériau dudit coeur (2).

10. Procédé de préparation d'une matrice de bitume avec la pastille (1) selon l'une ou plusieurs des revendications 1 à 8, **caractérisé en ce qu'**il comporte le chauffage d'un film de matériau thermofusible (3) qui enrobe les pastilles (1), sa dissolution afin de libérer ledit matériau qui modifie ainsi le bitume et libère simultanément les fils de verre.

11. Matrice de bitume, **caractérisée en ce qu'**elle peut être obtenue avec la pastille et avec le procédé selon l'une ou plusieurs des revendications précédentes.

12. Matrice de bitume selon la revendication précédente, **caractérisée en ce qu'**elle est constituée par des bétons à hautes performances, des bétons drainants, des bétons antidérapants et des bétons avec des microsurfaces.
